# EUROPEAN PATENT APPLICATION

(11) **EP 4 831 923 A1**
(43) Date of publication of application: **28.10.2026**
(21) Application number: 26172352.2
(22) Date of filing: 14.04.2026
(51) Int. Cl.: G06T 11/00

(54) **GENERATING AND APPLYING A UNIFORM FLOOR PLAN REPRESENTATION**

(30) Priority: 23.04.2025 US 202519187891
(71) Applicant: Microsoft Technology Licensing, LLC, Redmond, WA 98052 (US)
(72) Inventor: WANG, Rui, Redmond, 98052 (US); PAUTRAT, Remi Francois Jean, Redmond, 98052 (US); GRUBER, Lukas, Redmond, 98052 (US); POLLEFEYS, Marc Andre Leon, Redmond, 98052 (US)
(74) Representative: CMS Cameron McKenna Nabarro Olswang LLP

(57) **Abstract**

A training system trains a floor plan-encoding machine-trained model ("model") that converts an image that depicts a floor plan into a universal latent-space floor plan representation. The floor plan representation is referred to as universal or uniform because different floor plans that depict the same building layout in different ways map to the same latent-space floor plan representation. The training system also trains an image-encoding model that maps a camera image that depicts a part of a building layout to a latent-space image representation. A fusing operation integrates the latent-space image representation into a spatially-matching part of a latent-space floor plan representation produced by the floor plan-encoding model. The approach used by the training system eliminates the need to train and maintain different downstream models.

## Description

### BACKGROUND

Floor plans are conventionally used by architects, builders, and maintenance personnel to understand the layouts of indoor spaces. Typically, each floor plan is a scaled technical drawing of an overhead view of a building layout, e.g., showing the relative locations of walls, doors, windows, and other structural elements in a building. Recently, developers have trained machine-trained models that create floor plans or that perform operations based on input floor plans. For example, some machine-trained models create floor plans from sensory data collected within buildings, such as images and LiDAR scans. Typically, the process of developing machine-trained models is both time-intensive and resource-intensive in nature.

### SUMMARY

An illustrative technique is described herein for training a floor plan-encoding machine-trained model ("model"). Once trained, the floor plan-encoding model converts an image that depicts a floor plan into a universal latent-space floor plan representation. The floor plan representation is said to be universal or uniform because different floor plans that depict the same building layout in different ways map to the same latent-space floor plan representation. In other words, "universal" means agnostic to the format that is used to express the floor plan.

According to another aspect, the technique also trains an image-processing model. Once trained, the image-processing model maps a camera image (e.g., an RGB mage) that depicts a part of a building (e.g., part of a room within the building) into a latent-space image representation. The technique then fuses the latent-space image representation into a matching part of a latent-space floor plan representation.

According to another aspect, various application systems perform their operations by consulting a localization system. The localization system, in turn, performs its operations based on, at least in part, a latent floor plan representation.

Among other technical benefits, the technique eliminates the need to train and maintain different downstream models and/or localization systems that are predicated on the use of floor plans having specific formats. This reduces the amount of time and resources involved in developing and maintaining machine-trained models. It also fosters interoperability between different models and systems that rely on the same latent-space floor plan representation.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF DRAWINGS

Fig. 1 shows a floor plan (FP)-processing system for generating and applying universal latent-space floor plan representations.
Fig. 2 shows a first localization system for performing a pose-determining function based on a latent-space floor plan representation produced using the FP-processing system of Fig. 1.
Fig. 3 shows a second localization system for performing a pose-determining function based on a latent-space floor plan representation produced using the FP-processing system of Fig. 1.
Fig. 4 shows a robot that uses a localization system that performs a pose-determining function based on a latent-space floor plan representation produced using the FP-processing system of Fig. 1.
Fig. 5 shows an artificial intelligent (AI) system that uses a localization system that performs a pose-determining function based on a latent-space floor plan representation produced using the FP-processing system of Fig. 1.
Fig. 6 shows a training system for training machine-trained models used by the FP-processing system of Fig. 1.
Fig. 7 shows three different training processes for training the machine-trained models of the FP-processing system of Fig. 1 using the training system of Fig. 6.
Fig. 8 shows another training system for training an artificial intelligence (AI) model in an application system. The application system interacts with a localization system that performs a localization function based on a latent-space floor plan representation produced using the FP-processing system of Fig. 1.
Fig. 9 shows an illustrative convolutional neural network (CNN) that can be used to implement parts of the FP-processing system of Fig. 1.
Fig. 10 shows an illustrative transformer neural network that can be used to implement parts of the FP-processing system of Fig. 1.
Fig. 11 is a flowchart that describes a process for training machine-trained models used by the FP-processing system of Fig. 1.
Fig. 12 is a flowchart that describes a processing for applying a localization system, where the localization system uses a latent-space floor plan representation produced using the FP-processing system of Fig. 1.
Fig. 13 shows computing equipment that, in some implementations, is used to implement any aspect of the features shown in the foregoing drawings.
Fig. 14 shows an illustrative type of computing system that, in some implementations, is used to implement any aspect of the features shown in the foregoing drawings.

The same numbers are used throughout the disclosure and figures to reference like components and features.

### DETAILED DESCRIPTION

### A. Illustrative Floor plan-Processing System

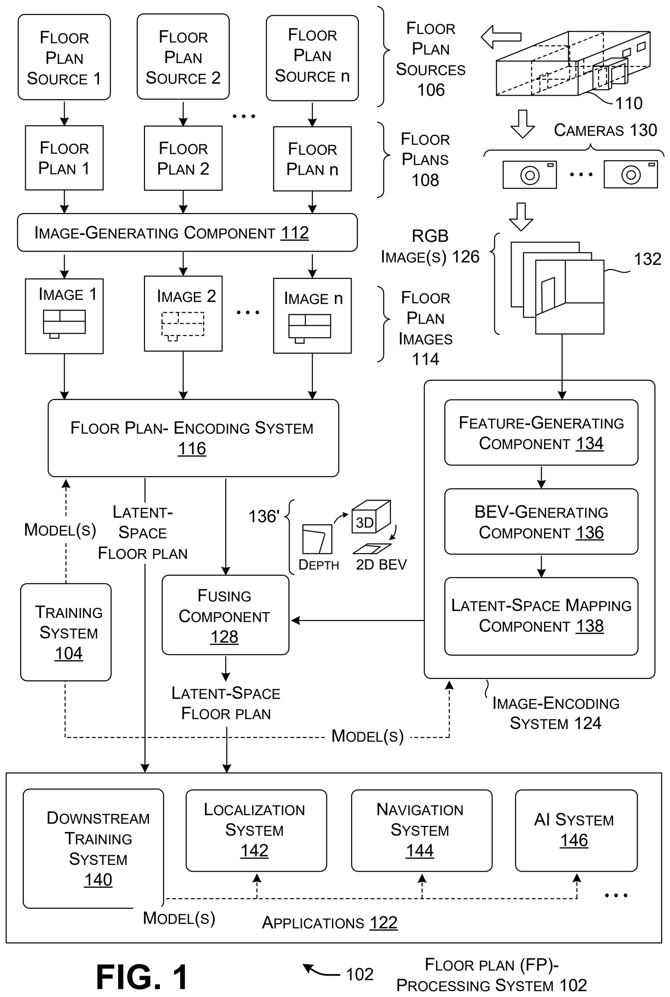

Fig. 1 shows a floor plan (FP)-processing system 102 for generating and applying universal latent-space floor plan representations. The FP-processing system 102 performs its function using one or more machine-trained models ("models"). A training system 104 trains the models. Section C describes the operation of the training system 104.

More specifically, in a training stage, the FP-processing system 102 processes subsets of floorplans, each of which illustrate the same building layout. The training enables the FP-processing system 102 to produce latent-space floor plan representations for any building layout. Once the models of the FP-processing system 102 are fully trained, the FP-processing system is able to convert any single floor plan into its universal latent-space counterpart. As described above, a universal latent-space floor plan representation is so-named because it represents plural different floor plans that depict the same building layout using different respective formats, and which may be produced by different floor plan-generating approaches.

The production of a universal latent-space floor plan representation facilitates the training and maintenance of downstream models that use the universal latent-space floor plan representation. This is because the universal representation avoids the need for training and maintaining plural versions of the downstream models that are configured to interpret specific types and formats of floor plans. Further, the use of a universal latent-space floor plan representation enables different models and systems that rely on the same universal representation to more readily interact. In other words, the use of a universal latent-space floor plan representation fosters interoperability among different components of a data processing environment.

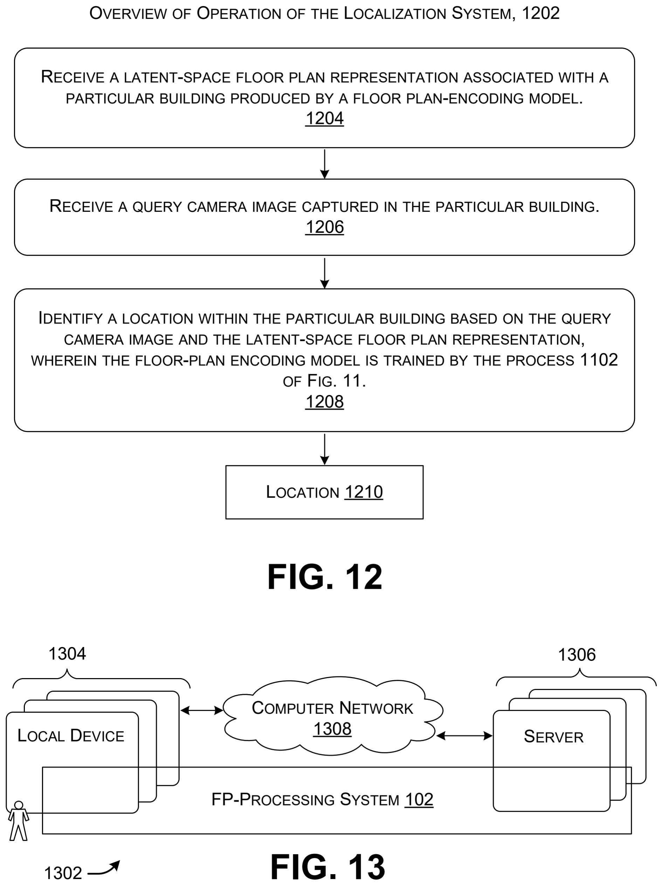

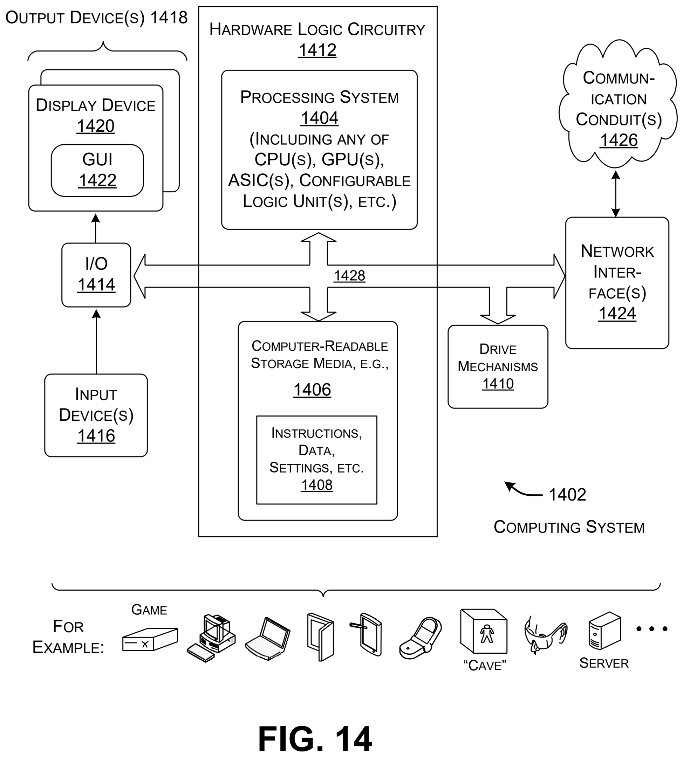

This section will explain the components of the FP-processing system 102, generally advancing from top to bottom of Fig. 1. The explanation will also mainly focus on the first-mentioned context of use of the FP-processing system 102, in which plural subsets of floorplans associated with different building layouts are processed. The following terminology is relevant to some examples presented below. A "machine-trained model" or "model" refers to computer-implemented logic for executing a task using machine-trained parameters that are produced in a training operation. A "parameter" refers to any type of parameter value that is iteratively produced by the training operation. A "token" refers to a unit of information processed by a machine-trained model, such as a word or a part of a word. In some contexts, terms such as "component," "module," "engine," and "tool" refer to parts of computer-based technology that perform respective functions. Figs. 13 and 14, described in Section F, provide examples of illustrative computing equipment for performing these functions.

In the training stage, different sources 106 use different respective approaches to generate floor plans 108. The floor plans 108 describe the floor layout of one or more buildings, such as the representative building 110. This particular building 110 includes three rooms and an entrance portico. Other buildings have floor layouts of any level of complexity, and which may include any number of architectural features.

In some examples, the sources 106 include a human architect who manually produces a floor plan, with or without the assistance of computer-aided drafting tools. If available, the sources 106 may include plural different floor plans independently developed by different architects for the same building. Another source represents a computer-generating variation of a floor plan that is manually produced by the architect. For example, an editing tool can modify the floor plan produced by the architect by distorting or degrading it, changing line thicknesses, and/or changing shading and/or line styles. Another source represents a floor plan produced by a computer-aided design (CAD) tool. Another source represents a map that is automatically built up over time based on measurements made within the building. For example, this source may represent a simultaneous localization and mapping (SLAM) system or a structure from motion (SfM) system. These types of systems use any combination of sensing devices to make their measurements, including LiDAR, visible-light cameras (e.g., for capturing RGB images), depth cameras (for capturing RGB images together with depth information), and so on. The maps produced by these techniques are expressed in any format, including a point cloud, a mesh (e.g., a graph of nodes and edges), etc.

In the training stage, the FP-processing system 102 processes subsets of floorplans, each of which illustrate the same building layout. The training (which is described in Section C) enables the FP-processing system 102 to produce latent-space floor plan representations for any building layout. Once the models of the FP-processing system 102 are fully trained, the FP-processing system 102 is able to convert any single floor plan into its universal latent-space counterpart.

An image-generating component 112 converts the floor plans 108 into respective rasterized floor plan images 114. In some examples, the image-generating component 112 preprocesses a floor plan before subjecting it to rasterization. For example, the image-generating component 112 may scan a paper version of a floor plan. In another example, the image-generating component 112 manipulates a CAD tool to provide an overhead (top-down) depiction of a cross section of the building 110. Alternatively, the image-generating component 112 performs perspective transformations, such as inverse perspective mapping (IPM), to produce a top-down view. In another example, the image-generating component 112 performs binning on a point cloud representation of a floor plan, where each bin represents a number of points within a cell having a prescribed dimension (e.g., 20 cm by 20 cm). While the subset of floor plan images produced by the image-generating component 112 for each building all provide an overhead view of the building, they also depict the overhead view in different respective ways, originating in the different respective approaches that were used to produce the floor plans 108.

A floor plan-encoding system 116 uses a floor plan-encoding model (not shown) to map each floor plan image into a latent-space representation. A latent-space floor plan representation is a distributed vector (or vectors) in a latent vector space. In some examples, the latent-space floor plan representation will not have a direct visual counterpart that resembles the overhead view of the building 110. Rather, the latent-space floor plan representation encodes the semantics of the overhead view in a way that is interpretable by downstream machine-trained models (described below).

In some examples, the floor plan-encoding system 116 includes a feature-generating function for converting each of the floor plan images into an instance of feature information. It performs this task by operating on individual pixels or patches of pixels in each floor plan image. In some implementations, the floor plan-encoding system 116 uses any type of neural network to perform this task, such as a convolutional neural network (CNN) (e.g., the ResNet50 model) and/or a transformer-based neural network. Note that the floor plan-encoding system 116 performs the same feature-generating function on different floor plan images 114, regardless of the floor plan sources 106 used to produce the floor plans 108 on which the floor plan images 114 are based.

The floor plan-encoding system 116 also includes a latent space mapping function that maps each instance of feature information into a latent-space floor plan representation. As will be described in Section C, the training system 104 trains the floor plan-encoding model (used by the floor plan encoding system 116) to produce the same latent-space floor plan representation for any subset of floor plan images that depict the same building layout. This latent-space floor plan representation constitutes a universal or uniform representation. The latent space mapping function performs its mapping task using any type or combination of types of neural networks (such as a CNN and/or a transformer-based neural network). One particular type of CNN for performing this mapping task is an hourglass (U-Net) type neural network.

In some examples, the universal latent-space floor plan representation produced by a fully trained floor plan-encoding system 116 is used by one or more applications 122. In other examples, an image-encoding system 124 maps one or more camera images 126 into one or more respective latent-space image representations, and a fusing component 128 integrates the latent-pace image representation(s) into the latent-space floor plan representation produced by the floor plan-encoding system 116. This is performed by fusing a latent-space representation of a camera image taken at a known location with a spatially-matching (e.g., spatially-aligned) part of the latent-space floor plan representation. The image-encoding system 124 uses an image-encoding model (not shown) to map each camera image to its latent-space image representation. Section C will describe how this model is trained.

For the specific case of the building 110, Fig. 1 shows that one or more cameras 130 capture one or more camera images 126 within the building. Each camera image has any format. For example, at least some of the camera images 126 are RGB images captured by one or more RGB cameras. Each camera image depicts a particular part of the building, depending on where it was captured. For example, a camera image 132 shows two walls and an interior door within the building 110. The image-encoding system 124 maps each camera image to its latent-space image counterpart, and the fusing component 128 merges this latent-space image representation with an appropriate part of the latent-space floor plan representation for the building 110, where the appropriate part is determined based on the known location at which the camera image was taken.

In some examples, the image-encoding system 124 includes a feature-generating component 134 that maps each camera image into an instance of feature information. The feature-generating component 134 is implemented by any type of neural network, such as a CNN and/or a transformer-based neural network. The feature-generating component 134 performs its transformations on individual pixels or patches of each captured image. A bird-eye view (BEV)-generating component 136 first maps the instance of feature information into depth information. The depth information provides information regarding the depths of surfaces shown in the camera image 132. For example, consider a particular pixel in the camera image 132 that represents a small portion of wall. The depth information describes the distance of that small portion from an origin point, corresponding to the virtual position of the camera that captured the camera image 132. The BEV-generating component 136 then: (1) projects the depth information into a three-dimensional space; and (2) projects the points in three-dimensional space to a two-dimensional space. The two-dimensional space provides the desired overhead view of the surfaces in the camera image 132. The second projection is performed by mapping columns of points in the three-dimensional space to respective cells in the two-dimensional space. In the graphical illustration 136', Fig. 1 shows the transformation from feature information to depth information, from depth information to 3D, and from 3D to 2D BEV. Other implementations use other BEV-converting strategies. General information regarding the standalone topic of BEV representation of camera images can be found in: MA, et al., "Vision-Centric BEV Perception: A Survey," arXiv, arXiv:2208.02797v2 [cs.CV] June 7, 2023, 19 pages, and Li, et al., "Delving into the Devils of Bird's-eye-view Perception: A Review, Evaluation and Recipe," arXiv, arXiv:2209.05324v4 [cs.CV], September 27, 2023, 26 pages. In some implementations, the BEV-generating 136 uses any type or combination of types of neural networks to perform its functions, including a CNN, a transformer-based neural network, etc.

A latent-space mapping component 138 converts the overhead information produced by the BEV-generating component 136 into a latent-space image representation in the same latent space as the latent-space floor plan representations. In some implementations, the latent-space mapping component 138 uses any type or combination of types of neural networks, including a CNN, a transformer-based neural network, etc. In some examples, the training system 104 fine-tunes parameters of the latent-space mapping component 138 to align with the embeddings produced by the floor plan-encoding system 116. The training system 104 can separately train the parameters of the feature-generating component 134 and the BEV-generating component 136, independent on the embeddings produced by the floor plan-encoding system 116. Alternatively, the models used by the feature-generating component 134 and the BEV-generating component 136 are trained by others and used "as is" without fine-tuning or other adaption.

The fusing component 128 uses any technique to merge each latent-space image representation with the associated latent-space floor plan representation (that is, the floor plan representation for the building in which the camera image was taken). Consider the case in which the location of the camera image is known, e.g., because the location was manually recorded during the capture of the camera image, or the location is automatically generated by a pose-capturing technique, such as a SLAM or a SfM technique. Based on this location, the fusing component 128 superimposes the latent-space image representation over a spatially-matching part of the latent-space floor plan representation, and then merges the values of overlapping features. For example, the fusing component 128 uses a max-pooling operation to select the feature in each column of information that has the largest value. Thus, if a camera image represents a particular part of a wall surface more robustly than a floor plan image, the fusing component 128 will use the information from the camera image to represent this part.

Note that it is possible for some floor plans to include objects and/or structure that is not found in other floor plans. For example, one of the floor plan representations may depict the presence of a furnace in a particular room of the building, whereas another floor plan may omit this information. The training system 104 addresses this issue by learning to ignore the presence of features that are specific to only some of the floor plans. As a result, the latent floor plan representation describes only the common features in the building 110, such as walls, doors, and windows. In general, the latent-space floor plan representation is resilient to small deviations in the layout of an indoor space, as depicted by one or more of the input floor plans.

The downstream applications 122 make use of a latent-space floor plan representation produced by the floor plan-encoding system 116, once fully trained, in different ways. A downstream training system 140 trains another model based, in part, on the information imparted by the latent floor plan representation. Such a model is referred to herein as a downstream model, since it is developed and used after the training of the floor plan-encoding system 116 and image-encoding system 124. A localization system 142 determines a current pose of a camera based on one or more captured camera images and the latent-space floor plan representation. A navigation system 144 controls the movement of a robot or vehicle using the localization system 142. An artificial intelligence (AI) system 146 performs an AI-assisted function based, in part, on the localization system 142. For example, the AI system 146 may represent a language model that responds to queries. The AI system 146 consults the localization system 142 when a query requires spatial information imparted by the latent-space floor plan representation. Section B provides additional information regarding representative application systems.

### B. Illustrative Application Systems

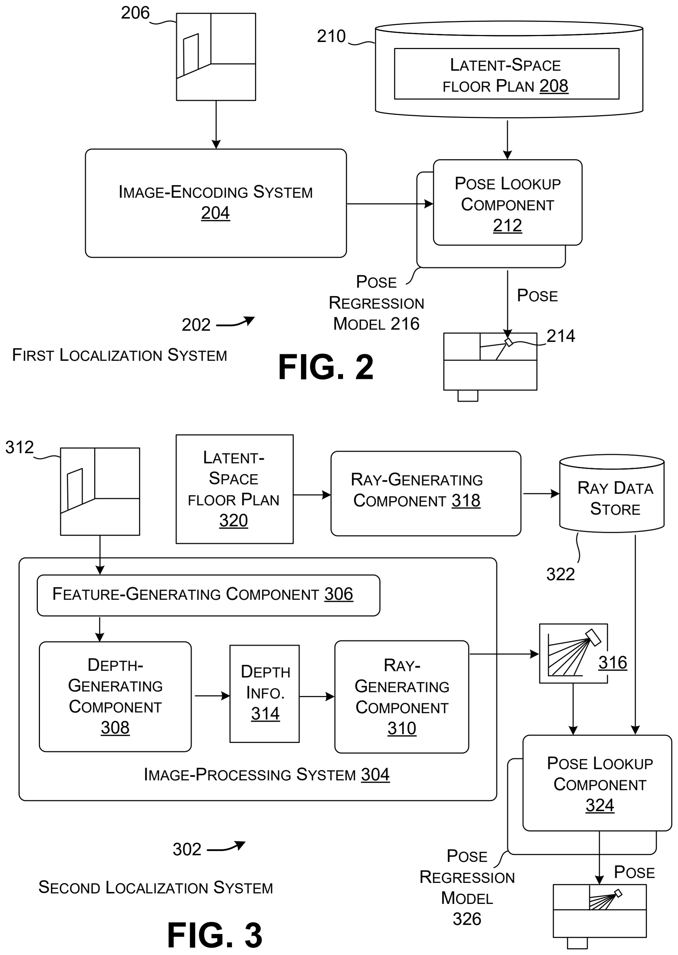

Fig. 2 shows a first localization system 202 that performs a pose-determining function. The localization system 202 includes an image-encoding system 204 for mapping a camera image 206 to a latent-space image representation. The camera image 206 is captured by a camera within a building and shows a particular part of the interior of that building. In some examples, the image-encoding system 204 is implemented by the same functionality as the image-encoding system 124 of Fig. 1, but here operating in the inference stage, not the training stage.

A latent-space image representation corresponds to a particular part of a corresponding latent-space floor plan representation 208, previously produced by the floor plan-encoding system 116. A data store 210 stores the latent-space floor plan representation 208. A pose lookup component 212 searches the data store 210 to identify the patch of the latent-space floor plan representation 208 that most closely matches the latent-space image representation. Once found, the pose lookup component 212 retrieves pose information that describes the pose associated with the patch. Pose, as used herein, identifies the location of a camera 214 that captured the camera image 206 and its orientation. In some examples, there are six dimensions (e.g., *x*, *y*, *z*, roll, pitch, and yaw) associated with any pose measurement. The pose lookup component 212 uses any distance metric to compare the similarity between two latent-space representations, including Euclidean distance, cosine similarity, etc. Alternatively, or in addition, a pose regression model 216 is trained to directly generate the pose without performing a search; in this case, the weights of the pose regression model 216 capture the knowledge imparted by the latent-space floor plan representation 208. The pose lookup component 212 and pose regression model 216 are implemented using any type or combination of types of models, including a CNN, a transformer-based neural network, etc.

Fig. 3 shows a second localization system 302 for performing a pose-determining function. The localization system 302 includes an image-processing system 304 having a feature-generating component 306, a depth-generating component 308 and a ray-generating component 310. The feature-generating component 306 uses any type of neural network (e.g., a CNN) to convert a query camera image 312 to feature information. The camera image 312 is captured by a camera within a building and shows a particular part of the interior of that building. The depth-generating component 308 maps the feature information into depth information 314. The depth information 314 provides information regarding the depth of surfaces shown in the camera image 312 with respect to a virtual point representing the location of the camera. The depth-generating component 308 is implemented by any type or combination of types of neural networks, including a CNN, transformer-based neural network, etc. The ray-generating component 310 projects a plurality rays in a horizontal plane which extend from an origin point (e.g., a virtual point that represents a location of the camera) to the surfaces represented by the depth information 314. Fig. 3 shows an illustrative collection rays 316 which extend in a horizontal plane from an origin point to the surface of two adjoining walls. In some examples, the rays 316 are equi-angularly spaced, meaning that the angle between adjacent pairs of rays is the same. In some implementations, the ray-generating component 310 is implemented by an algorithm that applies geometry-based rules to draw the rays.

In another processing path, a ray-generating component 318 produces a plurality of collections of rays at different locations in a latent-space floor plan representation 320. The ray-generating component 318 stores the collections of rays in a data store 322. Each collection of rays is annotated with pose information that describes a pose of a camera in the building, meaning that, if a camera captured a camera image at that pose, the image-processing system 304 would have mapped this camera image into the same collection of rays. A pose lookup component 324 uses any similarity metric to find a collection edges in the data store 322 that best matches the collection of rays 316 associated with the query camera image 312. For example, the pose lookup component 324 compares the sum of lengths of a candidate collection of rays (which can be stored in advance) with a sum of lengths of the collection of rays 316 associated with the camera image 312, and finds the candidate collection of edges having the closest match. Or the pose lookup component 324 superimposes the two collections of rays being compared, determines the differences between individual counterpart rays in the two collections, and then generates a measure that identifies the average of the computed differences. Once a matching set of rays is found, the pose lookup component 324 retrieves pose information associated with this matching set of rays. Alternatively, or in addition, a pose regression model 326 is trained to directly generate the pose without performing a search, in which case the weights of the pose regression model 326 embody the information in the latent-space floor plan representation 320. The pose lookup component 324 and regression component 326 are implemented using any type or combination types of models, including a CNN, transformer-based neural network, etc.

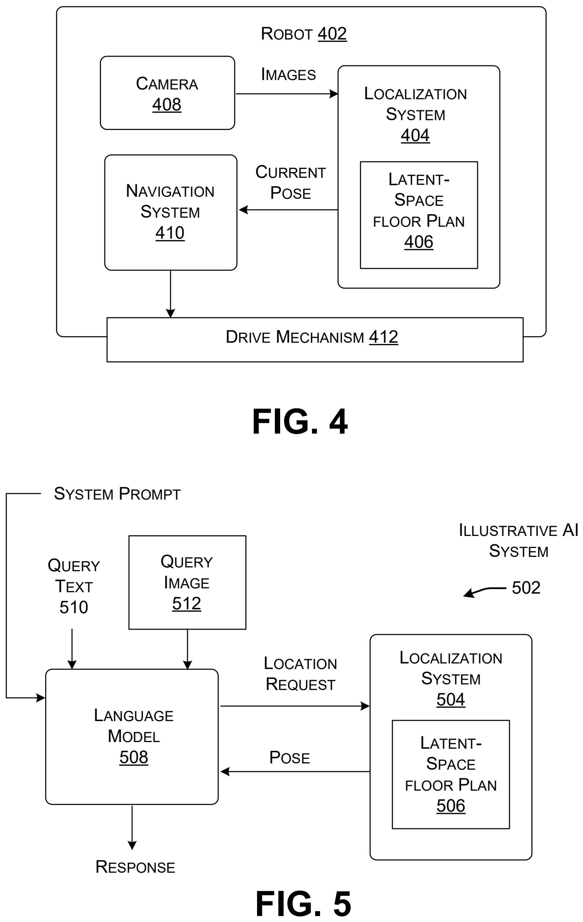

Fig. 4 shows a robot 402 that uses a localization system 404. The localization system 404 performs a localization function based on a latent-space floor plan representation 406 produced using the FP-processing system 102 of Fig. 1. For instance, the localization system 404 corresponds to the localization system 302 of Fig. 3 or the localization system 404 of Fig. 4. A camera 408 captures a camera image of the environment through which the robot 402 is moving, here an indoor space of a building described by the latent-space floor plan representation 406. The localization system 404 maps the camera image into pose information. The localization system 404 may also combine this pose information with other position/orientation measurements made by other position-sensing mechanisms, including LiDAR, an odometer, etc. A navigation system 410 directs movement of the robot 402 via instructions sent to a drive mechanism. The drive mechanism 412, for instance, controls the movement of the robot's wheels and other moving parts. The navigation system 410 generates the instructions based on movement objectives specified by rules and/or a navigation plan, together with information regarding the current pose provided by the localization system 404.

Other application systems extend the universal latent-space floor plan representations to controlling autonomous vehicles. Further, the principles described above are applicable to other environments in which the overhead view encompasses outdoor spaces, or an entire campus or city block, etc. Here, roadways would be analogous to hallways and entire buildings would be analogous to rooms. Further, some applications describe a space using plural selectable zoom levels or sections (e.g., wings or floors), each having a latent-space floor plan representation generated in the manner described in Section C.

Fig. 5 shows an artificial intelligent (AI) system 502 that uses a localization system 504. The localization system 504 performs a pose-determining function based on a latent-space floor plan representation 506 produced using the FP-processing system 102 of Fig. 5. For instance, the localization system 504 corresponds to the localization system 302 of Fig. 3 or the localization system 404 of Fig. 4. A language model 508 receives a query in the form of query text 510 and/or a query camera image 512. For instance, a camera captures the query camera image 512 in the interior space of a building. The query text 510 presents a question that pertains to the query camera image 512, such as "Will a six foot couch fit in the alcove in the living room?," or "What is the distance between Room 102022 and the stairs?" The language model 508 may represent a transformer-based language model that is produced by finetuning a pretrained language model, such as the type of pretrained language model described in Touvron, et al., "LLaMA: Open and Efficient Foundation Language Models," arXiv, arXiv:2302.13971v1 [cs.CL], Feb. 27, 2023, 27 pages. In other examples, the language model 508 is a general purpose model that is commercially available, such as a language model in the GPT family of language models provided by Open AI of San Francisco, California.

The language model 508 also receives a system prompt, which serves as a preamble to the tokens of the query text 510 and query camera image 512. The system prompt informs the language model 508 what task it is being asked to perform, how it is to interpret the information fed to it, and how it is to format its output results. One part of the system prompt, for instance, instructs the language model 508 to generate a call to the localization system 504 when it encounters a question that requires information regarding the layout of the interior space of building. The trained parameters of the language model 508 enable it to make this decision. For example, the system prompt may instruct the language model 508 to formulate its call to conform with the particular application programming interface (API) hosted by the localization system 504. The language model 508 subsequently receives and processes the response from the localization system 504. In general, a language model 508 may make zero, one, or more calls to the localization system 504 in the course of answering a specific input query.

Other application systems apply the universal latent-space floor plan representations to extended reality applications, computer-aided design applications, etc.

### C. Illustrative Training System

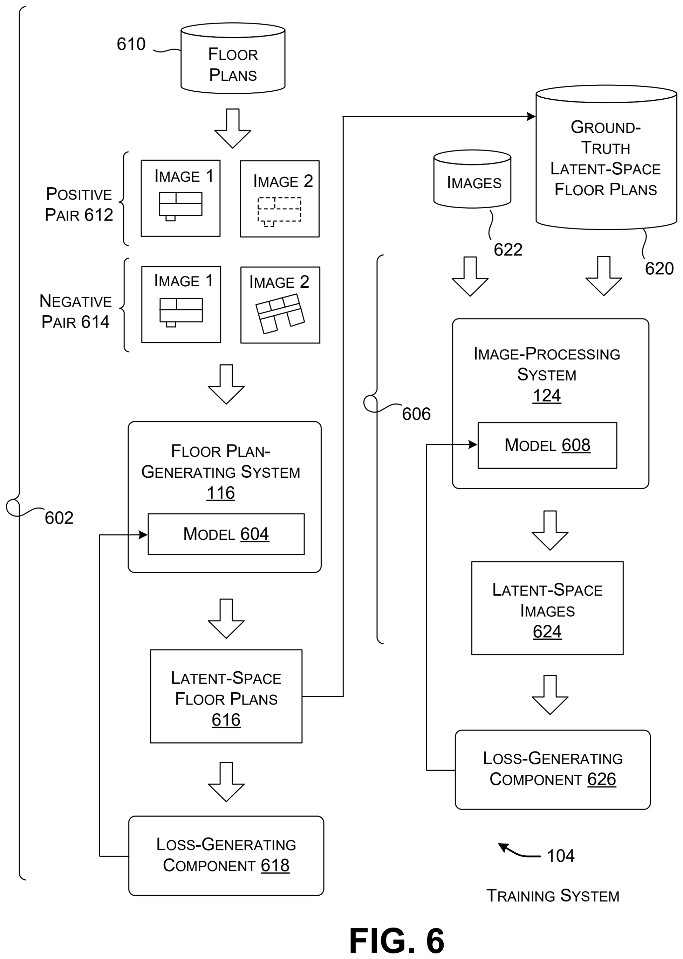

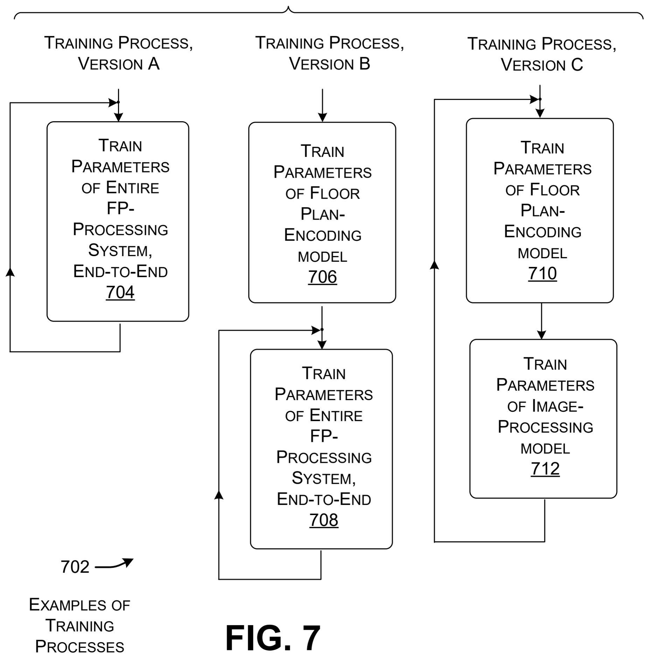

Fig. 6 shows the components of the training system 104 for training machine-trained models used by the FP-processing system 102 of Fig. 1. More specifically, functionality 602 trains a floor plan-encoding model 604 used by the floor plan-encoding system 116. The functionality 606 also trains an image-encoding model 608 used by the image-encoding system 124. Different training processes train these models in different respective orders, as will be clarified in the description of Fig. 7. For the purposes of the explanation of Fig. 6, the training system 104 trains the floor plan-encoding model 604, and then trains the image-encoding model 608. This arrangement corresponds to a teacher-student training framework, where the floor plan-encoding model 604 functions as the teacher and the image-encoding model 608 serves as the student.

Referring first to the functionality 602 for training the floor plan-encoding model 604, a data store 610 stores a plurality of floor plan images. Subsets of the floor plan images describe the layouts of the same building. That is, each subset of floor plan images associated with a particular building includes floor plan images that originate from different floor plan-generating approaches. Thus, although each subset depicts the same building layout from an overhead perspective, there are also differences between any two pairs of floor plan images in a subset.

In some implementations, the functionality 602 identifies positive pairs of floor plan images, each corresponding to two floor plan images that describe the same building layout. The functionality 602 also identifies negative pairs of floor plan images, each corresponding to floor plan images that describe different building layouts. Fig. 6 shows an illustrative positive pair 612 and an illustrative negative pair 614. The floor plan-encoding model 604 maps a plurality of positive and negative pairs into latent-space floor plan representations 616.

The latent-space floor plan representations for any positive pair of floor plan images should be close together in the latent vector space. The latent-space representations for any negative pair should be relatively far away from each other in the latent vector space. A loss-generating component 618 uses any loss function to generate loss information. A contrastive loss function, for instance, generates a measure of loss that reflects an extent to which latent-space representations for positive pairs are close together and latent-space representations for negative pairs are far apart. In other words, contrastive loss operates to push positive latent-space floor plan representations together, and pull negative latent-space floor plan representations apart. The loss-generating component 618 uses any metric to measure the similarity between any two floor plan images. For example, the loss-generating component 618 determines the difference in hidden state information (generated by the floor plan-encoding model 604) between corresponding pixels or patches of the two floor plan images, and averages the differences to produce a similarity measure. A parameter-updating component (not shown) updates the parameters of the floor plan-encoding model 604 based on the loss measure. In some implementations, the training system 104 updates parameters using stochastic gradient descent in combination with back propagation.

Now referring for the functionality 606 for training the image-encoding model 608, a data store 620 stores latent-space floor plan representations produced by the floor plan-encoding model 604 after a prescribed number of training cycles have been completed. In this phase, the latent-space floor plan representations serve as approximations of ground-truth floor plan representations, meaning they are accepted as being correct (although they may have some flaws). A data store 622 stores camera images captured in buildings associated with the floor plans in the data store 620.

The image-encoding model 608 maps the camera images into latent-space image representations 624. A loss-generating component 626 uses supervised learning to compute a loss measure that describes an extent to which the latent-space image representations 624 match corresponds patches in the latent-space floor plan representations (where the locations of these patches are the known locations at which the camera images were taken). A parameter-updating component (not shown) updates the parameters of the image-encoding model 608 based on the loss measure.

In other words, in the particular implementation described in Fig. 6, the floor plan-encoding model 604 serves as a teacher model, and the image-encoding model 608 serves as a student model, which attempts to duplicate the ground-truth information produced by the floor plan-encoding model 604. In other implementations, the training system 104 trains the floor plan-encoding model 604 and the image-encoding model 608 at the same time. For example, the training system 104 can generate positive and negative latent-space image representations to combine with a particular patch of a latent-space floor plan representation at a particular location. A positive latent-space image representation is a representation that is intended to match the patch (as is the case of a camera image taken at the particular location in the building), while a negative latent-space image representation is a representation that is not intended to match the patch (as in the case of a camera image taken at a different location in the building). The loss-generating component 626 uses contrastive learning to maximize the probability of positive image-patch pairings and minimize the probability of negative image-patch pairings. A parameter-updating component (not shown) then updates the parameters of both the framework-encoding model 604 and the image-encoding model 608 based on this loss measure.

Fig. 7 shows three different training processes (A, B, C) 702 for training the machine-trained models of the FP-processing system 102 of Fig. 1 using the training system 104 of Fig. 6. In operation of 704 of training process A, the training system 104 trains all of the parameters of all of the models of the FP-processing system 102 in end-to-end fashion. That is, the training system 104 generates a measure of loss based on output results produced by the fusing component 128 using any loss function, and back propagates updated parameters through all of the models of the FP-processing system 102. The training system 104 repeats this process for one or more additional cycles, as indicated by the looping arrow.

For the training process B, in operation 706, the training system 104 initially trains the parameters of just the floor plan-encoding model 604. This initial phase stabilizes the learning to follow by providing generally reliable latent-space floor plan representations. In operation 708, the training system 104 trains the parameters of the entire FP-processing system 102 in end-to-end fashion over one or more cycles.

For the training process C, in operation 710, the training system 104 trains the parameters of the floor plan-encoding model 604 (without yet considering the contribution of the image-encoding model 608). In operation 712, the training system 104 trains the parameters of the image-encoding model 608, treating the parameters of the floor plan-encoding model 604 as frozen. The looping arrow indicates that the training system 104 repeats this series of training operations (710, 712) one or more times.

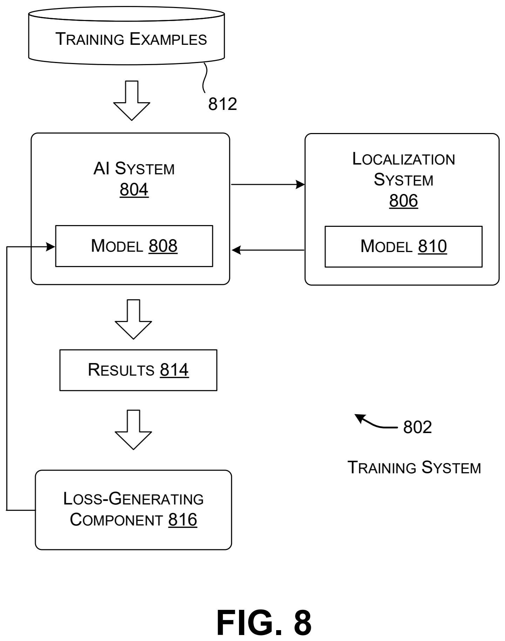

Fig. 8 shows another training system 802 for training an application system 804 that uses a localization system 806, where that localization system 806 performs a localization function based on a latent-space floor plan representation produced using the floor plan-encoding system 116 of Fig. 1, which is treated as fixed or frozen at this stage. For example, the functionality shown in Fig. 8 corresponds to the AI system 502 described above in connection with Fig. 5. The application system 804 relies on an application model 808 to perform its functions, and the localization system 806 relies on a model 810 to perform its functions. A data store 812 stores training examples, each including an input example and a corresponding ground-truth response.

The application system 804 maps the input examples to model-generating output results 814. A loss-generating component 816 measures an extent to which the model-generating output results 814 match the ground-truth output results. A parameter-updating component (not shown) updates the parameters of the application model 808 used by the application system 804 based on the loss measure. If not frozen, the parameters of the model 810 used by the localization system 826 can also be updated at this time.

Note that since the localization system 806 is predicated on the use of a universal latent-space floor plan representation, the training system 802 need not train plural versions of the application system 804 for different kinds of floor plans having different formats and/or which originate from different floor plan-generating processes. This factor reduces the amount of time, effort, and resources that are used to train models. It also simplifies maintenance of the application system 804, since only one version needs to be maintained. In other words, the use of a universal latent-space floor plan representation promotes scalability of any downstream model produced based on a latent-space floor plan representation.

Independent of the advantages in training the application system 804, is also more time-efficient and resource-efficient to generate and maintain a single universal latent-space floor plan representation, rather than a set of format-specific floor plan representations.

Note that parts of this section described the use of a contrastive loss function. Other implementations use other loss functions or combinations of loss functions, such as a cross entropy loss function, or a Kullback-Leibler (KL) divergence loss function. Alternatively, or in addition, a loss-generating component performs reward-based training, such as Direct Preference Optimization (DPO) or Proximal Policy Optimization (PPO).

### D. Illustrative Machine-Trained Models

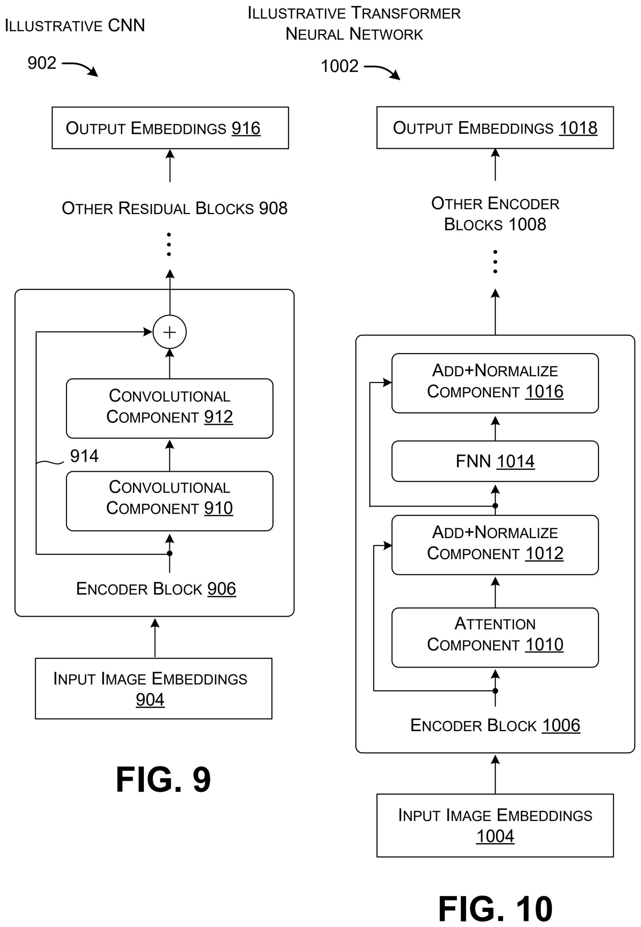

Fig. 9 shows an illustrative convolutional neural network (CNN) 902 that can be used to implement parts of the FP-processing system 102 of Fig. 1. In some contexts, the CNN 902 operates on input information that describes pixels or patches in a floor plan image or a camera image captured by a camera in a building. Input image embeddings 904 represent the input information.

The CNN 902 includes a pipeline that includes plural encoder blocks (e.g., encoder blocks 906, 908) optionally interspersed with pooling components, not shown). Fig. 9 specifically shows the illustrative case in which the representative encoder block 906 includes a pair of convolutional components (910, 912). Fig. 9 also shows an optional residual connection 914 that adds input information fed to the first convolutional component 910 to output information produced by the second convolutional component 912. The topmost layer of the CNN 902 produces output embeddings 916.

Each convolutional component performs a convolution operation that involves moving an n × m kernel (e.g., a 3 × 3 kernel) across feature information supplied to the convolutional component. At each position of the kernel, the convolutional component generates the dot product of the kernel values with the underlying values of the feature information. Each pooling component (not shown) down-samples results of a preceding convolutional operation using some sampling function, such as, for example, a maximum operation that selects a maximum value within a subset of values. Additional information regarding the kind of convolutional neural network shown in Fig. 9 can be found in He, et al., "Deep Residual Learning for Image Recognition," arXiv, arXiv:1512.03385v1 [cs.CV], December 10, 2015, 12 pages.

Fig. 10 shows an illustrative transformer-based neural network 1002 ("transformer") that can be used to implement parts of the FP-processing system 102 of Fig. 1. In some contexts, the transformer 1002 operates on a series of input image embeddings 1004 that represent patches in a floor plan image or a camera image captured by a camera in a building. The input image embeddings 1004 also encode position information that describes the positions of the patches in the floor plan image or camera image. Each patch of the input image is analogous to a text token.

The transformer 1002 includes a pipeline of encoder blocks (1006, 1008). A first encoder block 1006 operates on the input image embeddings 1004, and includes, in order, an attention component 1010, a first add-and-normalize component 1012, a feed-forward neural network (FFN) component 1014, and a second add-and-normalize component 1016.

The attention component 1010 determines how much emphasis should be placed on parts of input information when interpreting other parts of the input information. In some examples, the attention component 1010 performs attention analysis using the following equation: $Attention \left(Q, K, V\right) = softmax \left(\frac{{QK}^{T}}{\sqrt{{d}_{k}}}\right) V$ (1).

The attention component 1010 produces query information *Q* by multiplying the input image embeddings by a query weighting matrix *W^{Q}*. Similarly, the attention component 1010 produces key information *K* and value information *V* by multiplying the input image embeddings 1004 by a key weighting matrix *W^{K}* and a value weighting matrix *W^{V}*, respectively. To execute Equation (1), the attention component 1010 takes the dot product of *Q* with the transpose of *K*, and then divides the dot product by a scaling factor $\sqrt{d}$, to produce a scaled result. The symbol *d* represents the dimensionality of *Q* and *K*. The attention component 1010 takes the Softmax (normalized exponential function) of the scaled result, and then multiplies the result of the Softmax operation by *V*, to produce attention output information. Background information regarding the general concept of attention is provided in Vaswani, et al., "Attention Is All You Need," in 31st Conference on Neural Information Processing Systems (NIPS 2017), 2017, 11 pages.

Although not shown, in some examples, the first encoder block 1006 includes plural attention components associated with plural heads. Each attention head performs the computations specified by Equation (1), but with respect to a particular representational subspace that is different than the subspaces of the other attention heads. The first encoder block 1006 concatenates the output results of the separate attention heads, and then multiplies the results of this concatenation by another weight matrix *W^{O}*.

The add-and-normalize component 1012 includes a residual connection that combines (e.g., sums) input information fed to the attention component 1010 with the output information generated by the attention component 1010. The add-and-normalize component 1012 then normalizes the output information generated by the residual connection. The other add-and-normalize component 1016 performs the same functions as the first-mentioned add-and-normalize component 1012. The FFN component 1914 transforms input information to output information using a feed-forward neural network having any number of layers. A final layer of the last encoder block produces output embeddings 1018.

In some implementations, a post-processing component (not shown) performs post-processing operations on the output embeddings. For example, the post-processing component performs a machine-trained linear transformation on the final output embeddings 1018, and processes the results of this transformation using a Softmax component (not shown). The transformer 1002 uses the output of the post-processing component to predict the next token in the input sequence of tokens or to perform some other function (e.g., a classification function). In some implementations, the transformer 1002 operates in an auto-regressive manner. To operate in this way, the transformer 1002 appends a predicted token to the end of the sequence of input tokens, to provide an updated sequence of tokens. In a next pass, the transformer 1002 processes the updated sequence of tokens to generate a next predicted token.

The two types of models described herein are illustrative. In other examples, the FP-processing system 102 uses any combination of recurrent neural networks (RNNs), other types of feed-forward neural networks (e.g., multilevel perceptrons), diffusion models, selective state space models (e.g., Mamba models), etc.

### E. Illustrative Processes

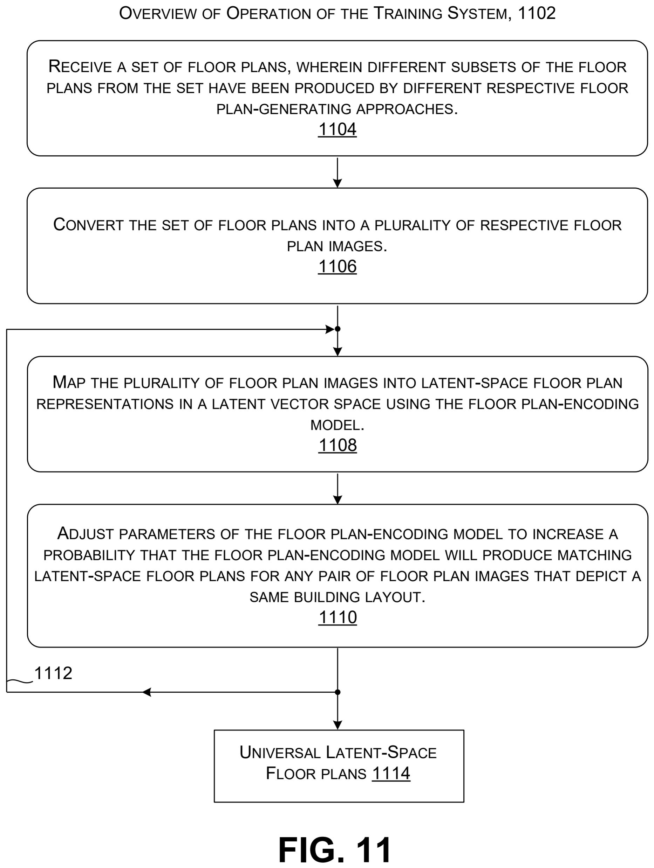

Figs. 11 and 12 show two processes that represent an overview of the operation of the functions described in the previous sections. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 13 and 14.

More specifically, Fig. 11 shows a process 1102 for training a floor plan-encoding machine-trained model (e.g., the floor plan-encoding model 604). In block 1104, the training system 104 receives a set of floor plans, wherein different subsets of the floor plans from the set have been produced by different respective floor plan-generating approaches. In block 1106, the training system 104 converts the set of floor plans into a plurality of respective floor plan images. In block 1108, the training system 104 maps the plurality of floor plan images into latent-space floor plan representations in a latent vector space using the floor plan-encoding model. In block 1110, the training system 104 adjusts parameters of the floor plan-encoding model to increase a probability that the floor plan-encoding model will produce matching latent-space floor plans for any pair of floor plan images that depict a same building layout. The loop 1112 indicates that the blocks 1108 and 1110 are repeated one or more times to produce a latent-space floor plan representation 1114.

Fig. 12 shows a process 1202 for localizing an image based on a latent-space floor plan representation. In block 1204, a localization system (e.g., the localization system 202 or 302) receives a latent-space floor plan representation associated with a particular building produced by a floor plan-encoding model (e.g. the floor plan-encoding model 604). In block 1206, the localization system receives a query camera image captured in the particular building. In block 1208, the localization system identifies a location 1210 within the particular building based on the query camera image and the latent-space floor plan representation. The latent-space floor plan representation is trained by the process 1102 of Fig. 11.

### F. Illustrative Computing Systems

Fig. 13 shows computing equipment 1302 that, in some implementations, is used to implement the computing systems described in the previous sections. The computing equipment 1302 includes a set of local devices 1304 coupled to a set of servers 1306 via a computer network 1308. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, an immersive "cave," a media device, a vehicle-borne computing system, any type of robot computing system, a computing system in a manufacturing system, etc. In some implementations, the computer network 1308 is implemented as a local area network, a wide area network (e.g., the Internet), one or more point-to-point links, or any combination thereof.

The bottom-most overlapping box in Fig. 13 indicates that the functionality of the FP-processing system 102 (including the training system 104 and the applications 122) is capable of being spread across the local devices 1304 and/or the servers 1306 in any manner. In one example, the FP-processing system 102 is entirely implemented by a local device. In another example, the functions of the FP-processing system 102 are entirely implemented by the servers 1306. Here, a user is able to interact with the servers 1306 via a browser application running on a local device. In other examples, some of the functions of the FP-processing system 102 are implemented by a local device, and other functions of the FP-processing system 102 are implemented by the servers 1306. In some implementations, for instance, the machine-trained models of the FP-processing system 102 are implemented by the servers 1306, and the remainder of the functions of the FP-processing system 102 are implemented by at least one local device.

Fig. 14 shows a computing system 1402 that, in some implementations, is used to implement any aspect of the mechanisms set forth in the above-described figures. For instance, in some implementations, the type of computing system 1402 shown in Fig. 14 is used to implement any local device or any server shown in Fig. 13. In all cases, the computing system 1402 represents a physical and tangible processing mechanism.

The computing system 1402 includes a processing system 1404 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1402 also includes computer-readable storage media 1406, corresponding to one or more computer-readable media hardware units. The computer-readable storage media 1406 retains any kind of information 1408, such as machine-readable instructions, settings, model weights, and/or other data. In some implementations, the computer-readable storage media 1406 includes one or more solid-state devices, one or more hard disks, one or more optical disks, etc. Any instance of the computer-readable storage media 1406 represents a fixed or removable unit of the computing system 1402. Further, any instance of the computer-readable storage media 1406 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1402 utilizes any instance of the computer-readable storage media 1406 in different ways. For example, in some implementations, any instance of the computer-readable storage media 1406 represents a hardware memory unit (such as random access memory (RAM)) for storing information during execution of a program by the computing system 1402, and/or a hardware storage unit (such as a hard disk) for retaining/archiving information on a more permanent basis. In the latter case, the computing system 1402 also includes one or more drive mechanisms 1410 (such as a hard drive mechanism) for storing and retrieving information from an instance of the computer-readable storage media 1406.

In some implementations, the computing system 1402 performs any of the functions described above when the processing system 1404 executes computer-readable instructions stored in any instance of the computer-readable storage media 1406. For instance, in some implementations, the computing system 1402 carries out computer-readable instructions to perform each block of the processes described with reference to Figs. 11 and 12. Fig. 14 generally indicates that hardware logic circuitry 1412 includes any combination of the processing system 1404 and the computer-readable storage media 1406.

In addition, or alternatively, the processing system 1404 includes one or more other configurable logic units that perform operations using a collection of logic gates, such as field-programmable gate arrays (FPGAs), etc. In these implementations, the processing system 1404 effectively incorporates a storage device that stores computer-readable instructions, insofar as the configurable logic units are configured to execute the instructions and therefore embody or store these instructions.

In some cases (e.g., in the case in which the computing system 1402 represents a user computing device), the computing system 1402 also includes an input/output interface 1414 for receiving various inputs (via input devices 1416), and for providing various outputs (via output devices 1418). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1420 and an associated graphical user interface presentation (GUI) 1422. The display device 1420 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1402 also includes one or more network interfaces 1424 for exchanging data with other devices via one or more communication conduits 1426. One or more communication buses 1428 communicatively couple the above-described units together.

The communication conduit(s) 1426 is implemented in any manner, e.g., by a local area computer network, a wide area computer network (e.g., the Internet), point-to-point connections, or any combination thereof. The communication conduit(s) 1426 include any combination of hardwired links, wireless links, routers, gateway functionality, name servers, etc., governed by any protocol or combination of protocols.

Fig. 14 shows the computing system 1402 as being composed of a discrete collection of separate units. In some cases, the collection of units corresponds to discrete hardware units provided in a computing device chassis having any form factor. Fig. 14 shows illustrative form factors in its bottom portion. In other cases, the computing system 1402 includes a hardware logic unit that integrates the functions of two or more of the units shown in Fig. 14. For instance, in some implementations, the computing system 1402 includes a system on a chip (SoC or SOC), corresponding to an integrated circuit that combines the functions of two or more of the units shown in Fig. 14.

Described herein is a training system that trains a floor plan-encoding machine-trained model ("model") that converts an image that depicts a floor plan into a universal latent-space floor plan representation. The floor plan representation is referred to as universal or uniform because different floor plans that depict the same building layout in different ways map to the same latent-space floor plan representation. The training system also trains an image-encoding model that maps a camera image that depicts a part of a building layout to a latent-space image representation. A fusing operation integrates the latent-space image representation into a spatially-matching part of a latent-space floor plan representation produced by the floor plan-encoding model. The approach used by the training system eliminates the need to train and maintain different downstream models.

The following summary provides a set of illustrative examples of the technology set forth herein.

(A1) According to one illustrative aspect, a method (e.g., the process 1102) for training a floor plan-encoding model (e.g., the floor plan-encoding model 604) is described. The method incudes: receiving (e.g., in block 1104) a set of floor plans, wherein different subsets of the floor plans from the set have been produced by different respective floor plan-generating approaches; converting (e.g., in block 1106) the set of floor plans into a plurality of respective floor plan images; mapping (e.g., in block 1108) the plurality of floor plan images into latent-space floor plan representations in a latent vector space using the floor plan-encoding model; adjusting (e.g., in block 1110) parameters of the floor plan-encoding model to increase a probability that the floor plan-encoding model will produce matching latent-space floor plans for any pair of floor plan images that depict a same building layout; and repeating (e.g., in operation 1112) the mapping and adjusting one or more times.

(A2) According to the method of A1, for a particular subset of floor plans that depict a same building layout of a particular building: at least one floor plan is manually generated; and at least one floor plan is produced based on measurements automatically collected within the particular building.

(A3) According to the methods of A1 or A2, the floor plan-encoding model includes a convolutional neural network.

(A4) According to any of the methods of A1-A3, the floor plan-encoding model includes a transformer-based neural network.

(A5) According to any of the methods of A1-A4, the adjusting of parameters also adjusts the parameters of the floor plan-encoding model to increase a probability that the floor plan-encoding model will produce non-matching latent-space representations for any pair of floor plans that depict different building layouts.

(A6) According to any of the methods of A1-A5, the method incudes: receiving a plurality of camera images captured by cameras, the camera images depicting respective parts of buildings associated with the set of floor plans; converting the camera images into respective latent-space image representations using an image-encoding model; fusing the latent-space image representations into spatially-aligned portions of latent-space floor plan representations that are respectively associated with the buildings in which the camera images were captured; and adjusting parameters of the image-encoding model to increase a probability that the latent-space image representations match the spatially-aligned portions.

(A7) According to the method of A6, a particular latent-space image representation is associated with a part of a particular latent-space floor plan representation, and wherein the part of the particular latent-space floor plan representation is a ground-truth image representation against which the particular latent-space image representation is compared.

(A8) According to the methods of A6 or A7, the adjusting of the parameters of the image-encoding model is performed after the adjusting of the parameters of the floor plan-encoding model.

(A9) According to any of the methods of A6 or A7, the adjusting of the parameters of the image-encoding model is performed in a same updating operation as the adjusting of the parameters of the floor plan-encoding model.

(A10) According to any of the methods of A1-A9, the method further includes training an application model that uses a latent-space floor plan representation produced by the floor plan-encoding model. The training of the application model includes: using the application model to map input queries to responses, the application model generating the responses based on the latent-space floor plan representation; and adjusting parameters of the application model to increase a probability that the responses match ground-truth responses.

(A11) According to any of the methods of A1-A9, the method also includes, following training of the floor plan-encoding model: receiving a particular latent-space floor plan representation associated with a particular building produced by the floor plan-encoding model; receiving a query camera image captured in the particular building; and identifying a location within the particular building based on the query camera image and the particular latent-space floor plan representation.

(A12) According to the method of A11, a navigation system uses the location that has been determined to control movement of a robot.

(A13) According to the methods or A11, an application model uses the location to provide a response to an input query.

In yet another aspect, some implementations of the technology described herein include a computing system (e.g., the computing system 1402) that includes a processing system (e.g., the processing system 1404) having a processor. The computing system also includes a storage device (e.g., the computer-readable storage media 1406) for storing computer-readable instructions (e.g., the information 1408). The processing system executes the computer-readable instructions to perform any of the methods described herein (e.g., any individual method of the methods of A1-A13).

In yet another aspect, some implementations of the technology described herein include a computer-readable storage medium (e.g., the computer-readable storage media 1406) for storing computer-readable instructions (e.g., the information 1408). A processing system (e.g., the processing system 1404) executes the computer-readable instructions to perform any of the operations described herein (e.g., the operations in any individual method of the methods of A1-A13).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1412 of Fig. 14. The term "logic" likewise encompasses various physical and tangible mechanisms for performing a task. For instance, each processing-related operation illustrated in the flowcharts of Figs. 11 and 12 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (1102) for training a floor plan-encoding model (604), comprising:
receiving (1104) a set of floor plans (108), wherein different subsets of the floor plans from the set have been produced by different respective floor plan-generating approaches;
converting (1106) the set of floor plans (108) into a plurality of respective floor plan images (114);
mapping (1108) the plurality of floor plan images (114) into latent-space floor plan representations in a latent vector space using the floor plan-encoding model (604);
adjusting (1110) parameters of the floor plan-encoding model (604) to increase a probability that the floor plan-encoding model (604) will produce matching latent-space floor plans for any pair of floor plan images that depict a same building layout; and
repeating (1112) the mapping and adjusting one or more times.

2. The method of claim 1, wherein, for a particular subset of floor plans that depict a same building layout of a particular building:
at least one floor plan is manually generated; and
at least one floor plan is produced based on measurements automatically collected within the particular building.

3. The method of claim 1 or claim 2, wherein the floor plan-encoding model includes a convolutional neural network.

4. The method of any of claims 1 to 3, wherein the floor plan-encoding model includes a transformer-based neural network.

5. The method of any of claims 1 to 4, wherein the adjusting parameters also adjusts the parameters of the floor plan-encoding model to increase a probability that the floor plan-encoding model will produce non-matching latent-space representations for any pair of floor plans that depict different building layouts.

6. The method of any of claims 1 to 5, further comprising:
receiving a plurality of camera images captured by cameras, the camera images depicting respective parts of buildings associated with the set of floor plans;
converting the camera images into respective latent-space image representations using an image-encoding model;
fusing the latent-space image representations into spatially-aligned portions of latent-space floor plan representations that are respectively associated with the buildings in which the camera images were captured; and
adjusting parameters of the image-encoding model to increase a probability that the latent-space image representations match the spatially-aligned portions.

7. The method of claim 6, wherein a particular latent-space image representation is associated with a part of a particular latent-space floor plan representation, and wherein the part of the particular latent-space floor plan representation is a ground-truth image representation against which the particular latent-space image representation is compared.

8. The method of claim 6 or claim 7, wherein the adjusting of the parameters of the image-encoding model is performed after the adjusting of the parameters of the floor plan-encoding model.

9. The method of claim 6 or claim 7, wherein the adjusting of the parameters of the image-encoding model is performed in a same updating operation as the adjusting of the parameters of the floor plan-encoding model.

10. The method of any of claims 1 to 9, further comprising training an application model that uses a latent-space floor plan representation produced by the floor plan-encoding model, comprising:
using the application model to map input queries to responses, the application model generating the responses based on the latent-space floor plan representation; and
adjusting parameters of the application model to increase a probability that the responses match ground-truth responses.

11. The method of any of claims 1 to 9, wherein the method also includes, following training of the floor plan-encoding model:
receiving a particular latent-space floor plan representation associated with a particular building produced by the floor plan-encoding model;
receiving a query camera image captured in the particular building; and
identifying a location within the particular building based on the query camera image and the particular latent-space floor plan representation.

12. The method of claim 11, wherein a navigation system uses the location that has been determined to control movement of a robot.

13. The method of claim 11, wherein an application model uses the location to provide a response to an input query.

14. A processing system having a processor and a storage device that is configured to perform the computer-implemented method according to any of claims 1-13.

15. A computer-readable storage medium for storing computer-readable instructions that, when executed by a processing system, perform the computer-implemented method according to any of claims 1-13.
